**Europäisches Patentamt**

(19) **European Patent Office**

**Office européen des brevets**

(11) Veröffentlichungsnummer: **0 037 064**
**B1**

(12) **EUROPÄISCHE PATENTSCHRIFT**

(45) Veröffentlichungstag der Patentschrift:
**06.03.85**

(51) Int. Cl.⁴: **G 03 G 15/00,** G 03 B 27/58,
B 65 H 3/08, B 65 H 5/08

(21) Anmeldenummer: **81102231.8**

(22) Anmeldetag: **25.03.81**

(54) **Vorrichtung für den Transport von Druckformen.**

(30) Priorität: **02.04.80 DE 3012815**

(43) Veröffentlichungstag der Anmeldung:
**07.10.81 Patentblatt 81/40**

(45) Bekanntmachung des Hinweises auf die Patenterteilung:
**06.03.85 Patentblatt 85/10**

(84) Benannte Vertragsstaaten:
**BE DE FR GB IT NL**

(56) Entgegenhaltungen:
**EP - A - 0 000 048**
**DE - A - 2 160 765**
**DE - A - 2 516 884**
**DE - A - 2 837 647**
**DE - B - 2 462 216**
**DE - U - 6 947 980**
**DE - U - 7 802 578**
**US - A - 4 002 332**

(73) Patentinhaber: **HOECHST AKTIENGESELLSCHAFT,
Postfach 80 03 20, D-6230 Frankfurt am Main 80 (DE)**

(72) Erfinder: **Schön, Klaus-Peter, Rathenauplatz 14,
D-6200 Wiesbaden 1 (DE)**
Erfinder: **Back, Günter, Rosenstrasse 33,
D-6293 Diedenbergen (DE)**

## Beschreibung

Die Erfindung betrifft eine Vorrichtung für den Transport von Druckformen , die in einem Magazin gestapelt sind, zu einer Belichtungsstation mit Hilfe von Saugluft.

Die Herstellung von beschrifteten und bebilderten Druckplatten, die unmittelbar zum Drukken geeignet sind, geschieht in der Weise, daß diese Druckplatten zuerst elektrostatisch aufgeladen und anschließend eine Vorlage bildmäßig auf die einzelne Druckplatte projiziert wird. Nach Beendigung dieses Belichtungsvorgangs wird die Druckplatte mit einem Entwickler entwickelt, fixiert und entschichtet, wonach sie fertig für den Druck ist.

Aus der DE-B-2 462 216 ist ein Gerät zur elektrofotografischen Herstellung von Druckformen bekannt, bei dem die einzelne Druckform von einem Stapel in einem Plattenmagazin durch eine Transportvorrichtung abgehoben wird, die aus einem Transportwagen mit einer Unterdrucksaugeinrichtung besteht und welche die Druckform zu einer Belichtungsbühne transportiert. Um das Aufladen der einzelnen Druckformen zeitsparend mit deren Transport zu der Belichtungsbühne zu verbinden, ist eine Corona-Aufladestation für die elektrostatische Aufladung der Druckplatten an der Vorderseite des Transportwagens angeordnet und erstreckt sich quer zur Bewegungsrichtung des Transportwagens. Der Transportwagen läuft über zwei Führungsschienen und ist von einem auf der Oberseite angeordneten Motor antreibbar, der über ein Zahnrad mit einem Zahnstangentrieb im Eingriff steht, der parallel zu der Bewegungsrichtung des Transportwagens angeordnet ist. Dieser weist an der Unterseite eine Vakuumplatte auf, die über eine Anzahl von Löchern mit einer Vakuumpumpe in Verbindung steht. Beim Aufsetzen des Transportwagens auf die Oberseite der obersten Druckplatte im Plattenmagazin wird ein Unterdruck erzeugt, durch den diese Druckplatte an die Vakuumplatte angesaugt wird. Danach wird der Transportwagen mit Hilfe des Motors in Richtung der Belichtungsbühne verfahren. Sobald er seine Position oberhalb der Belichtungsbühne erreicht hat, erfolgt eine Absenkung auf die Belichtungsbühne und das Aufheben des Vakuums der Vakuumplatte, so daß die Druckplatte freigegeben und auf die Belichtungsbühne abgesetzt wird. Diese ist gleichfalls als Vakuumplatte ausgebildet und wird mit Unterdruck beaufschlagt, so daß die Druckplatte fest gegen die Belichtungsbühne gepreßt wird.

Bei diesem bekannten Gerät sind die Druckplatten im Plattenmagazin mit der fotoleitenden Schicht nach oben gestapelt und werden mit der beschichteten Seite an die Vakuumplatte des Transportwagens angesaugt. Beim Einlegen eines neuen Stapels in das Plattenmagazin oder beim Öffnen des Geräts können die im Magazin noch vorhandenen Druckplatten durch das einfallende Licht vorbelichtet werden, wodurch dann die Druckqualität der fertig entwickelten Platte leiden kann. Beim Abheben der einzelnen Druckplatte vom Stapel wird die fotoleitende beschichtete Seite der Druckplatte mit Saugeinrichtungen berührt, die zwar einen wesentlich schonenderen Transport der Druckplatte im Vergleich zu Rollen oder Bändern bei bekannten Geräten ermöglichen, jedoch können mechanische oder physikalische Fehlstellen auf der fertigentwickelten Druckplatte nicht ausgeschlossen werden.

In der DE-A1-2 516 884 ist eine Entnahmevorrichtung für gestapelte Glasscheiben beschrieben, die einen schwenkbaren Hubzylinder mit einer Kolbenstange aufweist, die einen Saugteller vor- und zurückbewegt. Der Hubzylinder ist mit einem Schenkel eines winkelförmigen Schwenkarms verbunden, dessen Schwenkbewegung von einem Getriebemotor ausgehend, über eine Drehkurbel, eine Schubstange sowie eine weitere Drehkurbel übertragen wird, die über eine Welle mit dem Schwenkarm in Verbindung steht.

Aus der DE-A1-2 160 765 ist ebenfalls ein schwenkbarer Hubzylinder mit einer Kolbenstange bekannt, die einen hin- und herverfahrbaren Saugteller trägt, der Glasscheiben von einem Stapel abhebt, wobei der Hubzylinder zwischen einer Aufnahme- und einer Absetzposition um eine Drehachse verschwenkt wird.

Aus der veröffentlichten europäischen Patentanmeldung 0 000 048 ist eine Transportstation für Druckplatten bekannt, die einen Stapelbereich umfaßt, in dem sich ein Vorrat an Druckplatten befindet. Für die zwischen jeweils zwei Platten vorhandenen Papierblätter ist eine Papierablage vorhanden. Die Druckplatten werden durch einen Steuerungsmechanismus, der eine Anzahl von Saugnäpfen aufweist, vom Stapelbereich zu einem Förderband transportiert. Der Steuerungsmechanismus ist schwenkbar an einer Führungsstange befestigt, die über ein Getriebe mit einem Motor verbunden ist, um eine seitliche Gleitbewegung vor und zurück ausführen zu können. Die oberste Druckplatte wird von zumindest vier Saugnäpfen des Steuerungsmechanismus angesaugt. Dann schwenkt der Steuerungsmechanismus nach oben und gleichzeitig wird die Führungsstange mechanisch auf das Förderband hinbewegt. Wird das Vakuum in den Saugnäpfen aufgehoben, senkt sich der Steuerungsmechanismus nach unten ab und legt die Druckplatte auf dem Förderband ab. Ein zweiter Steuerungsmechanismus oberhalb des Papierzwischenblattes ergreift das Papierblatt, hebt es ab und befördert es zu der Papierablage.

Das Förderband transportiert die Druckplatte auf eine Belichtungsbühne, die eine Anzahl von Löchern in ihrer Oberfläche aufweist und eine Kammer bildet, die über eine Saugleitung mit einer Vakuumpumpe verbunden ist. Die Druckplatte wird, nachdem sie die richtige Stellung auf der Oberfläche der Belichtungsbühne eingenommen hat, durch Erzeugen eines Vakuums auf dieser festgehalten. Die Druckplatte wird mit Hilfe eines Belichtungssystems belichtet, das einen beweglichen Wagenschlitten aufweist, an dem eine Coronaaufladevorrichtung und ein Licht reflektierender Spiegel angeordnet sind. Ein Laser für die Abstrahlung von moduliertem Laserlicht ist so angeordnet, daß der von dem Laser ausgesandte Lichtstrahl von dem Spiegel abgelenkt wird und in einer Ebene etwa senkrecht zu der Oberfläche der auf der Belichtungsbühne aufliegenden Druckplatte auftrifft.

Auch bei dieser Stapelung der Druckplatten in einem Magazin mit der beschichteten fotoleitfähigen Schicht nach oben ist nicht ausgeschlossen, daß beim Öffnen des Geräts bzw. beim Nachfüllen des Stapels eine Vorbelichtung der zuoberst liegenden Druckplatte erfolgt, die sich bei der späteren Belichtung und Entwicklung der Druckplatte negativ auf die Qualität der druckfertigen Platte auswirken kann. Ebenso wie im zuvor erwähnten Stand der Technik muß beim Abheben der obersten Druckplatte vom Stapel die fotoleitfähige Schicht der Druckplatte mit Saugeinrichtungen berührt werden, was zu mechanischen oder physikalischen Fehlstellen auf der fertigen Druckplatte führen kann.

Aufgabe der Erfindung ist es, eine Vorrichtung der eingangs beschriebenen Art so zu verbessern, daß die beschichtete fotoleitende Seite der Druckplatte während des Transports von dem Plattenmagazin zu der Belichtungsbühne mechanisch nicht berührt wird und gegen eine Vorbelichtung weitgehend geschützt ist.

Diese Aufgabe wird erfindungsgemäß durch eine Vorrichtung der eingangs beschriebenen Art dadurch gelöst, daß ein um eine Achse schwenkbarer Hubzylinder mit einer aus dem Hubzylinder aus- und in diesen einfahrbaren Kolbenstange ausgerüstet ist, die an der unbeschichteten Seite der Druckform angreifende Saugelemente für das Ansaugen und Absetzen der obersten Druckform des Stapels trägt und daß oberhalb des Magazins eine Luftdüse angeordnet ist, deren Luftstrom nahezu tangential auf die beschichtete Seite der Druckform gerichtet ist, sobald der Hubzylinder die Druckform von dem Stapel abhebt, um ein Blatt zum Schutz der beschichteten Seite der Druckform gegen Beschädigungen von der Druckform abzulösen.

In Ausgestaltung der Erfindung sind die Saugelemente zum Ansaugen, Festhalten und Absetzen der Druckform auf eine horizontale Förderbahn auf einer schüsselförmigen Platte angeordnet, die als Halterung der Saugelemente mit der Kolbenstange verbunden ist. Diese Förderbahn kann ein Tisch sein, längs dem die Druckform zu einem dahinter angeordneten Belichtungstisch transportiert wird. In Weiterbildung der Erfindung ist das Magazin geneigt zur Senkrechten angeordnet, wobei der Hubzylinder in seiner Aufnahmeposition senkrecht auf die unbeschichtete Seite der obersten Druckform gerichtet ist und die schüsselförmige Platte parallel zu der unbeschichteten Seite der Druckform verläuft und auf diese zum Abheben der obersten Platte von dem Stapel soweit abgesenkt wird, bis daß die Saugelemente auf der Druckform aufsitzen.

Die vorteilhafte Weiterbildung der Erfindung ergibt sich aus den Merkmalen der Ansprüche 4 bis 6.

Mit der Erfindung wird der Vorteil erzielt, daß die Druckform, beispielsweise eine Druckplatte, die mit ihrer fotoleitfähigen beschichteten Seite nach unten im Plattenstapel liegt, mittels des drehbaren Schwenkzylinders bzw. Hubzylinders an ihrer unbeschichteten Seite angesaugt und in eine waagerechte Position gebracht wird, in der ihre beschichtete Seite nach oben zeigt und in dieser Position der Transport zu dem Belichtungstisch erfolgt. Dadurch ist sichergestellt, daß die fotoleitfähige Schicht der Druckplatte während des gesamten Transportes von dem Plattenmagazin zu der Belichtungsbühne weder mechanisch berührt noch vorbelichtet wird.

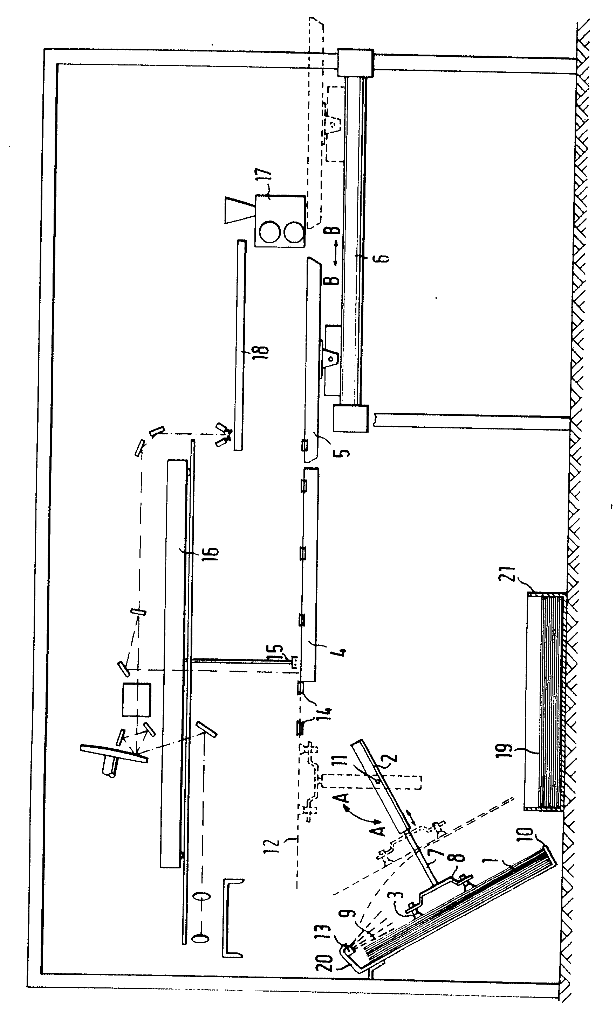

Ein Ausführungsbeispiel der Erfindung wird anhand der Zeichnung näher erläutert.

Die einzige Figur zeigt in schematisierter Darstellung verschiedene Bearbeitungsstationen einer Vorrichtung zur Abbildung einer Vorlage auf der fotoleitenden Oberfläche einer Druckplatte. Eine Transportstation für die Druckplatten 9 umfaßt einen schwenkbaren Hubzylinder 2 mit einer aus dem Hubzylinder aus- und in diesen einfahrbaren Kolbenstange 7. Die Druckplatten 9 sind in einem Magazin 10 in der Weise gestapelt, daß jede einzelne Druckplatte innerhalb eines Stapels 1 mit ihrer fotoleitfähigen beschichteten Seite nach unten zu liegen kommt. Die Druckplatten sind mit einem Blatt 19 aus Papier, Kunststoff, Folie oder dgl. Material auf ihrer Unterseite versehen, so daß dieses Blatt jeweils zwischen zwei Druckplatten 9 zu liegen kommt. Die Kolbenstange 7 trägt an dem aus dem Hubzylinder 2 herausragenden Ende eine schüsselförmige Platte 8, an der mehrere Saugelemente 3 befestigt sind. Der Hubzylinder ist um einen Drehpunkt 11 aus einer schrägen Lage in eine vertikale Lage verschwenkbar, wie dies durch den Doppelpfeil A-A angezeigt ist.

Das Magazin 10 ist zur Senkrechten geneigt angeordnet und an seinem oberen Ende ist an einem abgewinkelten Trägerarm 20 eine Luftdüse 13 vorgesehen. Die Luftdüse 13 ist derart ausgerichtet, daß der Luftstrom nahezu tangential auf die Unterseite der Druckplatte 9 gerichtet ist, sobald der Hubzylinder 2 die Druckplatte von dem Stapel 1 abhebt. Der Hubzylinder 2 ist in seiner Aufnahmeposition so um den Drehpunkt 11 geschwenkt, daß er senkrecht auf die unbeschichtete Seite der obersten Druckplatte 9 gerichtet ist. Dabei verläuft die schüsselförmige Platte 8 parallel zu der unbeschichteten Seite der Druckplatte 9 und wird auf diese aufgesetzt. Danach werden die Saugelemente 3 zum Ansaugen und Festhalten der Druckplatte 9 mit Unterdruck beaufschlagt und die Kolbenstange 7 in den Hubzylinder zum Teil eingefahren, bis die Druckplatte 9 die in der Zeichnung gestrichelt dargestellte Position einnimmt. In dieser Stellung hat der nahezu tangential auf die fotoleitfähige Schicht auf der Unterseite der Druckplatte 9 gerichtete Luftstrom aus der Luftdüse 13 das Blatt 19, das die beschichtete Seite der Druckplatte 9 gegen Beschädigungen schützt, zum größten Teil von der Unterseite der Druckplatte 9 abgelöst. Das Blatt 19, im allgemeinen ein Papierblatt, wird von dem Luftstrom in eine unterhalb des Belichtungstisches 4 angeordnete Auffangwanne 21 geblasen. Anschließend wird der Hubzylinder 2 um den Drehpunkt 11 in seine vertikale Stellung geschwenkt, so daß die Druckplatte 9 in der Ebene einer Förderbahn 12 zu liegen kommt. Dabei ist der Schwenkwinkel des Hubzylinders 2 von der schrägen Aufnahmeposition der Druckplatte 9 im Magazin 10 bis zur horizontalen Absetzposition auf der Förderbahn 12 größer als 90° und liegt im allgemeinen in einem Bereich zwischen 120° bis 150°. In der Ebene der Förderbahn 12 liegen Rollen 14, die eine Rille aufweisen. Diese Rollen liegen mit den Rillen an den sich gegenüberliegenden Längsseitenkanten der Druckplatte 9 an. Sobald der Unterdruck in den Saugelementen 3 aufgehoben wird, erfolgt die Freigabe der Druckplatte 9 und die angetriebenen Rollen 14 transportieren die Druckplatte 9 längs der Förderbahn 12 auf den Belichtungstisch 4. Die Druckplatte 9 kommt auf dem Belichtungstisch 4 auf einer Vakuumplatte zu liegen und sobald sie ihre Position auf dem Belichtungstisch 4 eingenommen hat, wird sie durch Erzeugen eines Vakuums auf diesem festgehalten. Oberhalb des Belichtungstisches 4 befindet sich ein horizontal verfahrbarer Belichtungswagen 16, der optische Einrichtungen zum Abtasten einer Vorlage 18 und zum Belichten der Druckplatte 9 trägt. Da es sich bei diesen Bearbeitungsstationen um bekannte Vorrichtungen handelt, werden sie nicht näher beschrieben.

An der Unterseite des Belichtungswagens 16 ist eine Corona 15 befestigt, die beim horizontalen Verfahren des Belichtungswagens 16 die Druckplatte 9 auflädt, die anschließend dann belichtet wird. Nachdem die Druckplatte 9 belichtet ist, wird sie durch die Rollen 14 auf den Entwicklertisch 5 weitertransportiert. Der Entwicklertisch 5 ist mit einer darunter angeordneten Antriebswelle 6 verbunden, längs der er in Richtung des Doppelpfeils B-B horizontal hin- und hervverschoben werden kann. Oberhalb des Entwicklertisches befindet sich eine Entwicklervorrichtung 17, die von oben her über eine Magnetbürste an die Oberfläche der Druckplatte 9 einen Entwicklerbelag, bestehend aus einer Mischung von Trägerteilchen und Toner, antreibt, während die Druckplatte 9 unterhalb der Entwicklervorrichtung 17 vorbeigeführt wird. Die entwickelte Druckplatte wird dann in eine nicht gezeigte Fixierungsvorrichtung transportiert, in welcher der bildmäßig verteilte Toner durch die Einwirkung von Strahlungswärme auf der Druckplattenoberfläche fixiert bzw. auf ihr aufgeschmolzen wird. Von der Fixiervorrichtung gelangt die bebilderte Druckplatte anschließend zu einer Entschichtungsvorrichtung, in der die Bildstellen auf der fotoleitenden Schicht entfernt werden, so daß die Druckplatte danach für den Einsatz in einer Offset-Druckmaschine geeignet ist.

## Patentansprüche

1. Vorrichtung für den Transport von Druckformen, die in einem Magazin gestapelt sind, zu einer Belichtungsstation mit Hilfe von Saugluft, dadurch gekennzeichnet, daß ein um eine Achse (11) schwenkbarer Hubzylinder (2) mit einer aus dem Hubzylinder aus- und in diesen einfahrbaren Kolbenstange (7) ausgerüstet ist, die an der unbeschichteten Seite der Druckform angreifende Saugelemente (3) für das Ansaugen und Absetzen der obersten Druckform (9) des Stapels (1) trägt, und daß oberhalb des Magazins (10) eine Luftdüse (13) angeordnet ist, deren Luftstrom nahezu tangential auf die beschichtete Seite der Druckform (9) gerichtet ist, sobald der Hubzylinder (2) die Druckform (9) von dem Stapel (1) abhebt, um ein Blatt (19) zum Schutz der beschichteten Seite der Druckform (9) gegen Beschädigungen von der Druckform (9) abzulösen.

2. Vorrichtung nach Anspruch 1, dadurch gekennzeichnet, daß die Saugelemente (3) zum Ansaugen, Festhalten und Absetzen der Druckform (9) auf eine horizontale Förderbahn (12) auf einer schüsselförmigen Platte (8) angeordnet sind, die als Halterung der Saugelemente mit der Kolbenstange verbunden ist.

3. Vorrichtung nach den Ansprüchen 1 und 2, dadurch gekennzeichnet, daß das Magazin (10) geneigt zur Senkrechten angeordnet ist, daß der Hubzylinder (2) in seiner Aufnahmeposition senkrecht auf die unbeschichtete Seite der obersten Druckform (9) gerichtet ist und daß die schüsselförmige Platte (8) parallel zu der unbeschichteten Seite der Druckform (9) verläuft und auf diese zum Abheben der obersten Druckform (9) soweit abgesenkt wird, bis daß die Saugelemente (3) auf der Druckform aufsitzen.

4. Vorrichtung nach den Ansprüchen 1 bis 3, dadurch gekennzeichnet, daß der Schwenkwinkel des Hubzylinders (2) von der schrägen Aufnahmeposition der Druckform (9) im Magazin (10) bis zur horizontalen Absetzposition der Druckform (9) auf der Förderbahn (12) größer als 90° ist.

5. Vorrichtung nach den Ansprüchen 1 bis 4, dadurch gekennzeichnet, daß in der Absetzposition der Druckform (9) die schüsselförmige Platte (8) des Hubzylinders (2) horizontal verläuft, daß die fotoleitfähige Schicht der von den Saugelementen (3) gehaltenen Druckform (9) nach oben weist und daß die unbeschichtete Seite der Druckform (9) auf gleicher Höhe mit einem Belichtungstisch (4) liegt, auf den die Druckform (9) mittels Rollen (14) transportiert wird.

6. Vorrichtung nach den Ansprüchen 1 bis 5, dadurch gekennzeichnet, daß in der Ebene der Förderbahn (12) die gerillten Rollen (14) liegen, deren Rillen mit den sich gegenüberliegenden Längsseitenkanten der Druckform (9) während des Transports der Druckform (9) zu dem Belichtungstisch (4) im Eingriff sind.

## Claims

1. A mechanism for transporting printing plates from a plate holder in which they are stacked to an exposure station, with the aid of suction air, characterized in that a swivelling lifting cylinder (2) swivelable about a pivotal point (11) is equipped with a piston rod (7) which may be extended from and retracted into the lifting cylinder which is carrying suction elements (3) which are engaging the uncoated side of the printing form for gripping by suction and depositing the uppermost printing form (9) of the stack (1) and in that an air jet (13) is arranged above the plate holder (10), the air stream of which is almost tangentially directed to the coated side of the printing form (9), as soon as the lifting cylinder (2) picks up the printing form (9) from the stack (1), whereby a sheet (19) protecting the coated side of the printing form (9) from damage, is detached from the printing form (9).

2. A mechanism as claimed in claim 1, characterized in that the suction elements (3) for suction, retaining and depositing the printing form (9) on a horizontal conveyor track (12) are arranged on a dish-shaped plate (8) which is connected, as holder of the suction elements, to the piston rod.

3. A mechanism as claimed in claim 1 and claim 2, characterized in that plate holder (10) is arranged in inclined position with respect to the perpendicular, wherein the lifting cylinder (2), in its receiving position, points vertically to the uncoated side of the uppermost printing form (9) and in that the dishshaped plate (8) extends parallel to the uncoated side of the printing form (9) and is lowered so far on the printing form in order to pick up the uppermost printing form (9), that the suction elements (3) are seating on the printing form.

4. A mechanism as claimed in claims 1 to 3, characterized in that the swivelling angle of the lifting cylinder (2) between the inclined receiving position of the printing form (9) in the plate holder (10) and the horizontal depositing position of the printing form (9) on the conveyor track (12) is greater than 90.

5. A mechanism as claimed in claims 1 to 4, characterized in that in the depositing position of the printing form (9), the dish-shaped plate (8) of the lifting cylinder (12) extends horizontally, the photoconductive layer of the printing form (9) retained by the suction elements (3) faces upwards and in that the uncoated side of the printing form (9) is on a level with an exposure table (4) on which the printing form (9) is transported by rollers (14).

6. A mechanism as claimed in claims 1 to 5, characterized in that the grooved rollers (14) are positioned in the plane of the conveyor track (12), the grooves of which are engaging the opposite longitudinal edges of the printing form (9) during transport of the printing form (9) to the exposure table (4).

## Revendications

1. Dispositif pour le transport de plaques d'impression empilées dans un magasin vers une station d'exposition à l'aide d'air d'aspiration, caractérisé en ce qu'un vérin de levage (2) pivotant autor d'un axe (11) est équipé d'une tige de piston (7) sortant du vérin et y rentrant, supportant des éléments d'aspiration (3) qui engagent le côté non revêtu de la plaque d'impression en vue de l'aspiration et du dépôt de la plaque d'impression supérieure (9) de la pile (1), et qu'une buse à air (13) est implantée au-dessus du magasin (10), le souffle d'air de celle-ci étant dirigé sur la face revêtue de la plaque d'impression (9) pratiquement tangentiellement, dès que le vérin de levage (2) soulève la plaque d'impression (9) de la pile (1), ce qui provoque le décollement d'une feuille (19) placée pour la protection de la face revêtue de la plaque d'impression (9) contre les endommagements.

2. Dispositif selon la revendication 1, caractérisé en ce que les éléments d'aspiration (3) pour l'aspiration, le maintien et le dépôt de la plaque d'impression (9) sur une voie de transport horizontale (12) sont placés sur une plaque en forme de récipient (8) reliée à la tige de piston et servant de support aux éléments d'aspiration.

3. Dispositif selon les revendications 1 et 2, caractérisé en ce que le magasin (10) est placé obliquement par rapport à un angle droit, le vérin de levage (2) étant, dans sa position de phéhension, dirigé verticalement vers la face non revêtue de la plaque d'impression supérieure (9) et la plaque en forme de récipient (8) étant parallèle à la face non revêtue de la plaque d'impression (9) et étant abaissée, pour la préhension de la première plaque (9) jusqu'au moment où les éléments d'aspiration (3) se trouvent sur la plaque d'impression.

4. Dispositif selon les revendications 1 à 3, caractérisé en ce que l'angle de basculement du vérin de levage (2) entre la position de réception oblique de la plaque d'impression (9) dans le magasin (10) jusqu'à la position de dépôt horizontale de la plaque d'impression (9) sur la voie de transport (12) est supérieur à 90°.

5. Dispositif selon les revendications 1 à 4, caractérisé en ce que dans la position de dépôt de la plaque d'impression (9) la plaque en forme de récipient (8) du vérin de levage (2) prend une position horizontale, et en ce que la couche photoconductrice de la plaque d'impression (9) maintenue par les éléments d'aspiration (3) est placée vers le haut et en ce que la face non revêtue de la plaque d'impression (9) est à la même hauteur qu'une table d'exposition (4) sur laquelle la plaque d'impression (9) est transportée au moyen de rouleaux (14).

6. Dispositif selon les revendications 1 à 5, caractérisé en ce que les rouleaux rainurés (14) dont les rainures sont en prise avec les faces longitudinales opposées de la plaque d'impression (9) pendant le transport de la plaque d'impression (9) vers la table d'exposition (4) sont placés dans le plan de la voie de transport (12).